# EUROPEAN PATENT APPLICATION

(11) **EP 4 800 541 A1**
(43) Date of publication of application: **02.09.2026**
(21) Application number: 25160620.8
(22) Date of filing: 27.02.2025
(51) Int. Cl.: G06F 8/10, G06F 11/3668, G06F 40/20

(54) **COMPUTER-IMPLEMENTED METHOD, SYSTEM AND COMPUTER PROGRAM FOR VERIFYING REQUIREMENTS AND TESTS TO BE USED FOR TEST-DRIVEN DEVELOPMENT OF AT LEAST ONE SOFTWARE COMPONENT**

(71) Applicant: Bayerische Motoren Werke Aktiengesellschaft, 80809 München (DE)
(72) Inventor: Parolini, Luca, 84032 Landshut (DE); Mammadov, Kamil, 81479 München (DE); Reinhart, Lukas, 85354 Freising (DE)

(57) **Abstract**

The present disclosure relates to a computer-implemented method, to a system and to a computer program for verifying tests to be used for test-driven development of at least one software component of a product, such as at least one software component of a vehicle. The method comprises obtaining (110) a natural language description of one or more requirements to be satisfied by the at least one software component, obtaining (120) a natural-language description or an executable code of one or more tests to be executed for verifying that the at least one software component satisfies the requirements, processing (130), using a large language model, LLM, the natural language description of the one or more requirements to be satisfied and the natural-language description or the executable code of the one or more tests to be executed, wherein the LLM is prompted to verify the one or more requirements to be satisfied and the one or more tests to be executed, and to provide an output based on the verification, and providing (140), via a user interface and based on the output of the large language model, information related to the verification.

## Description

### Field

The present disclosure relates to a computer-implemented method, to a system and to a computer program for verifying requirements and tests to be used for test-driven development of at least one software component of a product, such as at least one software component of a vehicle.

### Background

Development of high-integrity software typically relies on extensive work on requirement analysis and test design. From generic use cases, high-level requirements are defined and refined to lower-level requirements, which are then allocated to smaller and smaller functional units.

This process is very time consuming and error prone, since requirements are often described in informal languages such as plain English, German, or in a diagram. Similarly, the design of corresponding tests also relies on interpreting requirements and understanding which input test vectors would be relevant for adequately covering the entire scope of the requirements. This process is also error prone and time consuming.

In Y. Uygun, V. Momodu: "Local large language models to simplify requirement engineering documents in the automotive industry", a Large Language Model (LLM)-based chatbot was used to help developers in writing requirement documents, to improve requirement engineering in the automotive industry. In particular, Retrieval Augmented Generation (RAG) is used to extract relevant information from existing requirement documents, which is used to answer a requirement engineer's questions about the problem space.

There may be a desire to provide an improved concept for a tool for assisting a requirement engineer.

### Summary

This desire is addressed by the subject matter of the independent claims.

The proposed concept is based on the insight that LLMs are capable of finding correspondences between two sets of data. In the present context, this capability is used for requirement engineering, by identifying correspondences (or lack thereof) between requirement(s) a software component, such as a software component of a vehicle needs to satisfy and tests that can be used to determine that the software component does indeed satisfy the requirement(s). This is done by defining a first set of data that represents the requirement(s) a software component of a product (such as a vehicle or other type of instrument or machine) needs to satisfy and a second set of data that represents tests that are to be used for checking that the software component satisfies the requirement(s). The LLM is then prompted to verify the first and second sets of data. Depending on the focus of the prompt, the LLM can check whether the tests are suitable for proving that the requirements are satisfied (i.e., that every requirement is checked by a corresponding test), or whether the scope of the tests exceed the scope of the requirements, or whether the requirements are consistent with each other (i.e., without contradictions etc.). The output of the LLM, which can include suggestions to improve the requirement(s), test(s), or both, is then presented to the requirement engineer, who can use the output to refine the requirement(s) and/or the test(s). This way, a pre-trained AI (Artificial Intelligence), i.e., the LLM, can be used in the context of software development in the automotive industry.

Some aspects of the present disclosure relate to a computer-implemented method for verifying requirements and tests to be used for test-driven development of at least one software component of a product, such as at least one software component of a vehicle. The method comprises obtaining a natural language description of one or more requirements to be satisfied by the at least one software component. The method comprises obtaining a natural-language description or an executable code of one or more tests to be executed for verifying that the at least one software component satisfies the requirements. The method comprises processing, using a large language model, LLM, the natural language description of the one or more requirements to be satisfied and the natural-language description or the executable code of the one or more tests to be executed. The LLM is prompted to verify the one or more requirements to be satisfied and the one or more tests to be executed, and to provide an output based on the verification. The method comprises and providing, via a user interface and based on the output of the large language model, information related to the verification. By inputting both requirements and corresponding tests into an LLM, the LLM is able to identify correspondences (or lack thereof) and is able to provide suggestions on improving the requirements and/or tests, e.g., with respect to coverage, consistency etc.

There are various types of prompts that can be used to check for consistency between the requirement(s) and the test(s). For example, the LLM may be prompted to detect discrepancies between the one or more requirements to be satisfied and the one or more tests to be executed as part of the verification. This enhances the verification process by enabling the detection of discrepancies between the requirements and the tests. This ensures that any inconsistencies or mismatches are identified, thereby improving the overall accuracy and reliability of the test-driven development method.

Another issue lies in determining whether the test(s) are sufficient to determine whether the at least one software component satisfies the requirement(s). Accordingly, the LLM may be prompted to determine whether the one or more tests are suitable for proving the one or more requirements as part of the verification. This enhances the verification process by specifically prompting the LLM to assess the suitability of the tests in proving the requirements. This ensures that the tests are not only verified but also evaluated for their effectiveness in demonstrating that the software component meets the specified requirements, thereby improving the overall quality and reliability of the test-driven development process.

In some cases, the existing test(s) may be insufficient for determining whether the at least one software component satisfies the requirement(s). In this case, the LLM may be tasked with generating additional tests. According to an example, the LLM may be further prompted to generate, based on the natural language description of the one or more requirements to be satisfied and the natural-language description or the executable code of the one or more tests to be executed, executable code of one or more additional tests having a scope that exceed a scope of the existing tests. Alternatively, the LLM may be further prompted to generate, based on the natural language description of the one or more requirements to be satisfied and the natural-language description or the executable code of the one or more tests to be executed, a natural language description of one or more additional tests having a scope that exceed a scope of the existing tests. This improves the thoroughness of the test-driven development process by enabling the LLM to generate executable code for additional tests and potentially ensures that the scope of testing exceeds that of the existing tests, thereby improving coverage and potentially identifying more edge cases or scenarios that need to be addressed in the requirements.

In some cases, the tests may assume conditions that are not assumed as part of the requirements. To detect such scenarios, the LLM may be prompted to detect assumptions in the one or more tests without a match in the requirements as part of the verification. This helps to identify potential discrepancies and ensures a more comprehensive alignment between tests and requirements, thereby improving the overall quality and reliability of the test-driven development process for software components.

In various examples, the LLM may be prompted to determine one or more tests that exceed a scope of the requirements as part of the verification. This enables the identification of tests that go beyond the specified requirements. This helps in ensuring that the tests are focused and relevant, thereby improving the efficiency and effectiveness of the test-driven development process.

The LLM is not only useful in ensuring the consistency between requirement(s) and test(s), but they are also useful for determining that the requirements are mutually consistent. According to an example, the LLM may be prompted to determine contradictions between the one or more requirements to be satisfied as part of the verification. This ensures that the requirements are consistent and coherent, which is crucial for effective development of components.

In many large projects, as is the case in automotive development, higher-level requirements are broken down into lower-level requirements that are derived from the higher-level requirements. The LLM may be used to check the correspondence between the lower-level requirements and the higher-level requirements. For example, the requirements may comprise two or more levels of hierarchy, defining, between two levels of hierarchy, one or more upper-level requirements on the respective higher level of hierarchy and a plurality of derived requirements associated with an upper-level requirement on the respective lower level of hierarchy. The LLM may be prompted to verify a correspondence between the one or more upper-level requirements and the associated derived requirements as part of the verification. This ensures that the LLM checks for correspondences between hierarchical levels of requirements. This means that the method can validate whether derived requirements at a lower level correctly align with their corresponding upper-level requirements, thereby improving the consistency and completeness of the requirement engineering process.

One test that can be performed is used to determine whether the derived requirements can be mapped to partial functionality specified by the respective higher-level requirement. For example, the LLM may be prompted to verify that the derived requirements match subsets of functionality defined by the associated upper-level requirement as part of the verification. This ensures that there is a close correspondence between the higher-level requirement and the derived requirements on the lower level.

Another test may be used to determine that the derived requirements cover the entire scope of the higher-level requirement. In other words, the LLM may be prompted to verify that the derived requirements, taken together, cover the scope defined by the associated upper-level requirement as part of the verification. This may help in ensuring that derived requirements at a lower level of hierarchy collectively cover the scope defined by their associated upper-level requirement.

If this is not the case, the LLM can be used to generate additional derived requirements. For example, the LLM may be further prompted to generate, based on the natural language description of the one or more requirements to be satisfied and the natural-language description or the executable code of the one or more tests to be executed, one or more additional derived requirements based on a mismatch between the scope defined by the associated upper-level requirement and the scope of the derived requirements associated with the upper-level requirement. This leads to a more comprehensive and accurate set of requirements, thereby improving the overall test-driven development process.

In some cases, the LLM may be used to generate code for tests that are provided as natural language. For example, the LLM may be further prompted to generate executable code for at least one test based on the natural language description of the one or more tests. This enables the automatic generation of executable code for at least one test based on the natural language description of the tests. This can save time and reduce errors by eliminating the need for manual coding of tests, thereby streamlining the test-driven development process.

In many cases, the LLM will find inconsistencies and/or identify possible improvements for the requirement engineer. For example, the LLM may be prompted to output information about issues determined as part of the verification, with the information related to the verification being provided with the information about the issues determined as part of the verification.

In addition, the LLM may be used to suggest concrete improvements that can be adapted by the requirement engineer. In various examples, the LLM may be prompted to output information about proposed fixes for issues determined as part of the verification, with the information related to the verification being provided with the information about the proposed fixes. This improves the user's understanding of the verification process by explicitly providing information about any issues identified during the verification. This allows users to address specific problems in the requirements and/or tests, thereby improving the overall quality and effectiveness of the test-driven development process.

Another aspect of the present disclosure relates to a system for verifying tests to be used for test-driven development of at least one software component of a product, such as at least one software component of a vehicle. The system comprises one or more processors and one or more storage devices. The system is configured to perform the above method.

Another aspect of the present disclosure relates to a computer program having a program code for performing the above method, when the computer program may be executed on a computer, a processor, or a programmable hardware component.

### Brief description of the Figures

Some examples of apparatuses and/or methods will be described in the following by way of example only, and with reference to the accompanying figures, in which
- Fig. 1: shows a flow chart of an example of a method for verifying requirements and tests to be used for test-driven development of at least one software component of a product, such as at least one software component of a vehicle;
- Fig. 2: shows a schematic diagram of an example of a system for verifying requirements and tests to be used for test-driven development of at least one software component of a product, such as at least one software component of a vehicle.

### Detailed Description

The proposed concept aims at reducing costs in requirement analysis, test design, and development work by combining the benefits of Test-Driven Development and the text understanding and summarizing provided by artificial intelligence (AI) models, e.g., LLM-based models such as the GPT (Generative Pre-trained Transformer) models by OpenAl, the Llama models by Meta, and the Gemini models by Google.

Test-driven development (TDD) is a development process often used in software-related projects for bridging the communication gap between requirement engineers and software developers. In TDD, requirements are provided to developers in the form of executable specification, i.e. pieces of code that developers can use to verify that the code under development matches expectation. Once all tests provided by the requirement engineer pass, the software is guaranteed to meet expectations. TDD helps also requirement engineers in writing requirements which can be actually tested and providing clear pass/fail criteria for the system under test. TDD addresses, among others, the need of software developers to understand the requirements provided.

In complex systems, however, it is often impractical for a requirement engineer to adequately specify all requirements in the form of executable specifications. On the one hand, thinking about all input vectors for the executable specification is complex and time consuming, on the other hand, implementing the specifications so that they can be executed can require more time than developing the final software directly. For this reason, the proposed concept provides a mixed approach where requirements are still used as the key communication medium between requirement engineers and developers, however requirements are coupled with either executable specifications, or an informal, but accurate description of the executable specification. Such a description is to be made in such a way that a tester and a developer can derive tests and executable specifications from the provided test description without the need to interpret the need of the requirement.

AI is used to support the requirement engineer in providing an adequate test description. AI is also used to support the software developer to write the actual executable specification and the code satisfying it. AI is also used to support the tester in implementing the tests used for final system verification. In many cases, the executable specification can also be used by test engineers for final system verification, but there can be cases where different tests are required, e.g., where required by the development process.

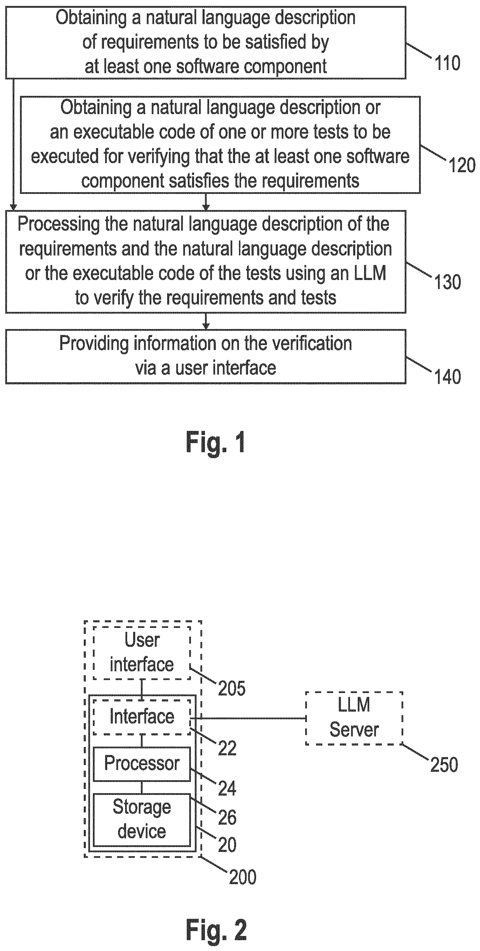

Fig. 1 shows a flow chart of an example of a method for verifying requirements and tests to be used for test-driven development of at least one software component of a product, such as at least one software component of a vehicle. The method comprises obtaining 110 a natural language description of one or more requirements to be satisfied by the at least one software component. The method comprises obtaining 120 a natural-language description or an executable code of one or more tests to be executed for verifying that the at least one software component satisfies the requirements. The method comprises processing 130, using an LLM, the natural language description of the one or more requirements to be satisfied and the natural-language description or the executable code of the one or more tests to be executed. The LLM is prompted to verify the one or more requirements to be satisfied and the one or more tests to be executed and to provide an output based on the verification. The method comprises providing 140, via a user interface and based on the output of the large language model, information related to the verification.

Fig. 2 shows a schematic diagram of an example of a system 20 for verifying requirements and tests to be used for test-driven development of at least one software component of a product, such as at least one software component of a vehicle. The system 20 comprises one or more optional interfaces 22, one or more processors 24 and one or more storage devices 26. The one or more processors 24 are coupled with the one or more optional interfaces 22 and with the one or more storage devices 26. The one or more processors 24 are configured to provide the functionality of the system 20, e.g., in conjunction with the one or more interfaces 22 (for communicating with other components or entities, such as the user interface 205 or an LLM server 250) and the one or more storage devices (for storing information, such as machine-readable instructions). For example, the one or more processors may provide their respective functionality by executing machine-readable instructions stored in the system 20 (e.g., in the one or more storage devices). Fig. 2 further shows a computer system 200 comprising the system 20 and the user interface 205. For example, the user interface may be an application or web application shown via a browser or a web application framework (such as Electron) running on the computer system. In some cases, the user interface may be shown on a computer system being different from the computer system hosting the system 20.

The proposed concept is based on the use of an LLM. A Large Language Model (LLM) is a type of artificial intelligence designed to understand and generate human-like text. These models are trained on vast amounts of text data, which allows them to learn patterns in language, such as grammar, vocabulary, and even nuanced meanings. By processing large datasets, LLMs can predict the next word in a sentence given the preceding context, making them effective for tasks like text completion, summarization, and translation. Their structure is based on neural networks, specifically the transformer architecture, which enables them to manage and understand long-range dependencies within the text.

Prompts serve as the initial input that guides the LLM's response. When users interact with an LLM, they provide prompts that can vary in complexity from simple phrases to elaborate questions or instructions. The purpose of a prompt is to set the context or specify the task for the LLM, helping it generate relevant and coherent output. For example, a prompt like "Explain the theory of relativity" directs the LLM to produce a detailed explanation on this topic, drawing upon the language model's understanding and trained data.

The output from an LLM is a sequence of text that aligns with the input prompt. This output can take many forms, such as completing a sentence, or providing an answer to a question. The quality and coherence of the output rely on the extent of the model's training data and its capacity to discern the nuances of human language. LLM outputs are typically probabilistic, meaning that for the same prompt, the model can generate different responses, depending on factors such as the inherent variability of language, model parameters, or randomization techniques used during text generation.

In the present context, the term LLM is used for any transformer-based language model having at least 500 million parameters (or at least 1 billion parameters, or at least 2.5 billion parameters, or at least 5 billion parameters).

In the present case, the LLM is prompted to verify the one or more requirements to be satisfied and the one or more tests to be executed and to provide an output based on the verification, based on the natural language description of the one or more requirements to be satisfied and the natural-language description or the executable code of the one or more tests to be executed. Thus, the prompt includes three components: (a) The natural language description of the one or more requirements to be satisfied, (b) the natural-language description or the executable code of the one or more tests to be executed, and (c) the instruction of which aspect of the one or more requirements to be satisfied and the one or more tests to be executed is to be verified (not necessarily in this order). In most cases, item (c) should be at the beginning or the end of the prompt, as LLMs tend to direct more attention to the beginning and the end of the prompt.

The LLM used in the present case is used to perform a certain task, specified by the prompt, on the natural language description of the one or more requirements to be satisfied and the natural-language description or the executable code of the one or more tests to be executed. Therefore, the LLM may be an instruction-tuned LLM. An instruction-tuned LLM is a language model that has been specifically fine-tuned to follow human (or machine-generated) instructions and perform tasks based on those instructions. This tuning process involves training the model on a dataset consisting of instructions and their corresponding outputs, allowing the model to better understand and respond accurately to human queries and directives.

In the present case, the LLM may be instruction-tuned for the purpose of verifying requirements and tests in the context of test-driven development. This can be done by collecting a training data set with a plurality of samples of training data, with each sample of training data comprising a prompt being input into the LLM and a desired output of the LLM. In the present case, prompts similar to the ones discussed in the following may be used, and desired outputs may be defined that represent a textual output that is expected of the LLM in later use. For example, fine-tuning techniques, such as LoRA or QLoRA may be used. LoRA (Low-Rank Adaptation) is a technique used to fine-tune models efficiently by adding trainable low-rank matrices to each layer of the model, thereby reducing the computation and memory requirements. QLoRA extends this by using quantization techniques alongside LoRA to further decrease the memory footprint and computational load, allowing models to run more efficiently on resource-constrained devices. Alternatively, a full-parameter fine-tune may be performed.

The proposed methodology starts with obtaining the natural language description of one or more requirements to be satisfied by the at least one software component and the natural-language description or an executable code of one or more tests to be executed for verifying that the at least one software component satisfies the requirements. In a later part of the present disclosure, suitable formats for the natural-language description of the one or more requirements to be satisfied and of the one or more tests to be executed are discussed in connection with Prompts 1, 3, 4 and 5. To give an example. A natural language description of a requirement may be as follows (prefixed by "Requirement:" or enclosed in "<requirement></requirement>" tags when part of the prompt): "ECU shall connect to WiFi when in plant mode and an appropriate WPA2-PSK configuration is provided", with ECU being an Electronic Control Unit, i.e., a component of the vehicle and WPA2-PSK (Wi-Fi Protected Access 2 - Pre-Shared Key) being a Wi-Fi security protocol. A natural language description of a corresponding test may be as follows
test-design:
test-name: Plant WiFi Connection Positive
preconditions:
   - ECU is in plant Mode
actions:
   - Configure network connection for WPA2-PSK (e.g., username and password)
   - Via SSH read Mac address of ECU for WiFi
   - Restart ECU
   - Wait 30 seconds
postcondition:
   - Access point confirms that a client with the MAC Address of the ECU is connected

Thus, a test may comprise one or more preconditions (that are checked at the beginning of the test), one or more actions (that are performed as part of the testing procedure), and one or more postconditions (that are checked at the end of the test). Tests may be specified in a semi-formal language, such as YAML (Yet Another Markup Language), with the natural language being in the semi-formal format specified by the markup language. Alternatively, a test may be specified using the code being used to test the precondition(s), perform the action(s) and test the postcondition(s). Similar to the requirements, the test(s) may be enclosed in tags, such as "<tests><test>....</test><test>... </test></tests>".

The prompt, including the natural language description of the one or more requirements to be satisfied and the natural-language description or the executable code of the one or more tests to be executed, is provided as input to the LLM. For example, the LLM may be an LLM that is hosted by the local system 20, with the system performing inference on the LLM. Alternatively, the prompt may be provided to a remote LLM server 205. The LLM responds with an output that is based on the prompt.

In general, engineers are still required to define use cases and refine requirements. Also tests need to be defined and designed for every requirement. However, the proposed AI-based concept may be used to assist the engineer with the following tasks.

For example, the proposed concept may be used to assist the requirement engineer verify that the described tests associated with each requirement indeed prove the requirement (1) and do not add additional assumption (2), or test more (3) than what set by the requirement. In other words, the LLM may be prompted to determine whether the one or more tests are suitable (1) for proving the one or more requirements as part of the verification. Additionally, or alternatively, the LLM may be prompted to detect assumptions (2) in one or more the tests without a match in the requirements as part of the verification. Additionally, or alternatively, the LLM may be prompted to determine one or more tests that exceed a scope of the requirements (3) as part of the verification. Taken together (1-3), the LLM may be prompted to detect discrepancies between the one or more requirements to be satisfied and the one or more tests to be executed as part of the verification. Prompt 1 given below is an example of such a prompt, albeit at a very general level.

In some cases, the proposed concept may be used to assist the requirement engineer to perform test definition from the requirements. In other words, the LLM may be further prompted to generate, based on the natural language description of the one or more requirements to be satisfied and the natural-language description or the executable code of the one or more tests to be executed, natural language description or executable code of one or more additional tests having a scope that exceed a scope of the existing tests. For example, Prompt 2 given below yields such executable code.

Additionally, or alternatively, the proposed concept may be used to assist the requirement engineer in implementation of tests from the test description. In this case, the LLM may be further prompted to generate executable code for at least one test based on the natural language description of the one or more tests.

In some cases, the LLM can also be used to detect conflicts between requirements. For example, the proposed concept may be used to assist the requirement engineer verify that requirements are not in conflict with each other. In other words, the LLM may be prompted to determine contradictions between the one or more requirements to be satisfied as part of the verification. For example, Prompt 5 is an example of such a prompt.

In many cases, requirements are defined in a hierarchical structure. In other words, the requirements may comprise two or more levels of hierarchy, defining, between two levels of hierarchy, one or more upper-level requirements on the respective higher level of hierarchy and a plurality of derived requirements associated with an upper-level requirement on the respective lower level of hierarchy. The LLM may be used to check that the relationship between the higher-level requirement and the associated lower-level requirements is sound. For example, the LLM may be prompted to verify a correspondence between the one or more upper-level requirements and the associated derived requirements as part of the verification. In particular, the proposed concept may be used to assist the requirement engineer verify that derived requirements match one or more subsets of the intended functionality described by the upper-level requirement. In other words, the LLM may be prompted to verify that the derived requirements match subsets of functionality defined by the associated upper-level requirement as part of the verification.

Additionally, or alternatively, the proposed concept may be used to assist the requirement engineer verify that derived requirements completely cover the intended functionality of the upper-level requirements, and no unspecified behavior of the system remains. In other words, the LLM may be prompted to verify that the derived requirements, taken together, cover the scope defined by the associated upper-level requirement as part of the verification.

If the scope is not entirely covered, the proposed concept may be used to assist the requirement engineer in the derivation of requirements and identification of missing ones the LLM may be further prompted to generate, based on the natural language description of the one or more requirements to be satisfied and the natural-language description or the executable code of the one or more tests to be executed, one or more additional derived requirements based on a mismatch between the scope defined by the associated upper-level requirement and the scope of the derived requirements associated with the upper-level requirement.

In many cases, the verification will yield issues, such as lack of correspondence between requirements and tests, mismatches in scope between the requirements and tests, but also typographical errors, use of the wrong acronyms, or logical errors. To help the engineers, the LLM may output any issues found with the one or more requirements and/or one or more tests, as shown in connection with the responses to Prompts 1-5. Thus, the LLM may be prompted to output information about issues determined as part of the verification, with the information related to the verification being provided with the information about the issues determined as part of the verification. In addition, the LLM may be tasked not only with identifying issues but also propose fixes for these issues. In other words, the LLM may be prompted to output information about proposed fixes for issues determined as part of the verification, with the information related to the verification being provided with the information about the proposed fixes.

The information is then provided, as natural language, and, if executable code is contained for the test(s), with executable code, to the user via the user interface 205, as information related to the verification. In some cases, output of the LLM is parsed and pre-formatted, e.g., to highlight the requirement(s) and/or the test(s), and/or to provide a difference (diff) between an original version of the requirement(s) or test(s) and the corrected or enhanced version of the requirement(s) or test(s) output by the LLM.

All of the verification and supporting steps defined above are error-prone and often the final product, in particular in the case of software components, show behaviors unexpected behaviors which were not originally meant by the engineering who wrote the requirements, or were not sufficiently analyzed. These errors, or discrepancies between intended functionalities, actual requirements, and actual developed product are extremely expensive to be corrected once a product is ready and the sooner they are detected, the lower the costs for correcting them are. This proposed concept therefore aims at minimizing communication errors in the requirement engineering and test development among multiple people, e.g., requirement engineers, testers, and developers, by relying on AI. Although the work still requires major human effort, use of AI can drastically reduce both costs at design time by helping analyzing requirements and derived requirements, and at software development by supporting definition of executable specification and of software which satisfy them.

In the following, a number of prompts and corresponding responses from the LLM are shown, to illustrate the proposed concept.

### Prompt 1:

I have the following SW requirement including the test. Check whether the test really tests the requirement:
Requirement: ECU shall connect to WiFi when in plant mode and an appropriate WPA2-PSK configuration is provided
test-design:
   test-name: Plant WiFi Connection Positive
   preconditions:
      - ECU is in plant Mode actions:
      - Configure network connection for WPE (e.g., username and password)
      - Via SSH read Mac address of ECU for WiFi
      - Restart ECU
      - Wait 30 seconds
   postcondition:
      - Access point confirms that a client with the MAC Address of the ECU is connected

### Response to Prompt 1:

To check whether the test really tests the requirement, we should look at the individual parts of the requirement and the test in detail:

### Requirement:

"ECU shall connect to WiFi when in plant mode and an appropriate WPA2-PSK configuration is provided."

### Requirements in detail:

1. ECU should connect to WiFi
2. The mode of the ECU must be set to "plant mode"
3. A suitable WPA2-PSK configuration must be provided

### Test design:

Test-name: Plant WiFi Connection Positive
Preconditions:
   1. ECU is in plant mode
      This ensures that the "plant mode" condition is met.
Actions:
   1. Configure network connection for WPE (e.g. username and password):
      There seems to be a typo here. It should probably be "WPA2" instead of "WPE", as WPA2-PSK is mentioned in the request.
      This is to ensure the provision of a suitable WPA2-PSK configuration.
   2. Read out the MAC address of the ECU for WiFi via SSH:
      This is helpful for validation in the post-condition.
   3. Restart ECU:
      This ensures that the configuration takes effect, and the connection setup is restarted.
   4. Wait 30 seconds:
      This gives the ECU enough time to connect to the WiFi.
Postcondition:
   1. Access point confirms that a client with the MAC Address of the ECU is connected:
      This checks whether the ECU is actually connected to the WiFi.

### Evaluation:

The test essentially covers the requirement well, as:
1. ECU is in plant mode: this is ensured by the precondition.
   A suitable WPA2-PSK configuration is provided: By the action in which the network connection is configured (noting the possible typo).
2. ECU connects to the WiFi: This is checked by the post-condition that the access point confirms the client with the MAC address of the ECU as connected.

### Suggestions for improvement:

1. Correction of the possible typo: Make sure that "WPA2-PSK" is used instead of "WPE".
2. Additional verification steps: Additional steps could possibly be added to ensure that the WPA2-PSK configuration has been entered correctly.

### Conclusion:

With the minor adjustments and verifications mentioned above, the test adequately tests the given requirement.

### Prompt 2 (based on Prompt 1 and the response to Prompt 1):

What further steps would you take to ensure that the WPA2-PSK configuration has been entered correctly?

### Response:

To ensure that the WPA2-PSK configuration has been entered correctly, the following additional steps could be added:

### Extension of the test design:

Preconditions:
1. ECU is in plant mode:
   This remains unchanged.

Actions:
1. Configure the network connection for WPA2 (e.g. SSID and password):
   Ensure that the SSID and password are correctly formatted and entered.
2. Verification of the WPA2-PSK configuration:
   Check directly after configuration and before restarting ECU whether the configuration has been saved correctly.
3. Read out the MAC address of the ECU for WiFi via SSH:
   This remains unchanged.
4. restart ECU:
   This remains unchanged.
5. Wait 30 seconds:
   This remains unchanged.

Postconditions:
1. Check that the WPA2-PSK configuration has been saved correctly:
   After restarting, but before establishing a connection, check again that the WPA2-PSK configuration is still present and correct.
2. The access point confirms that a client is connected to the MAC address of the ECU: This remains unchanged.

### Extended test design:

test-design:
test-name: Plant WiFi Connection Positive
preconditions:
   ECU is in plant Mode
actions:
   Configure network connection for WPA2 (e.g., SSID and password)
   Verify WPA2-PSK configuration is correctly entered and saved
   Via SSH read Mac address of ECU for WiFi
   Restart ECU
   Wait 30 seconds
   Verify WPA2-PSK configuration is still correctly saved post-restart postcondition:
      Access point confirms that a client with the MAC Address of the ECU is connected

These additional steps ensure that the WPA2-PSK configuration is entered correctly, saved and still present after the restart before the connection is checked.

### Prompt 3:

Now, please check the following requirement:
id: obi_provide_wifi_settings_via_mqtt
title: OBI provide WiFi settings via MQTT
requirement: >
   OBI shall provide relevant WiFi settings via MQTT.
Note: Parameters to be provided are defined at
   'ECU_diagnostic_jobs_for_setting_wifi_parameters'
test-design:
   name: OBI WiFi Configuration Read
   preconditions:
      ECU in plant Mode
      OBI active
      WiFi connection established
      MQTT connection established
   actions:
      Read WiFi parameters via MQTT
   postconditions:
      WiFi parameters match expectation

### Response

To check whether the test tests the given requirement completely and accurately, we look at both the requirement and the test design in detail.

### Requirement:

ID: obi_provide_wifi_settings_via_mqtt
Title: OBI provide WiFi settings via MQTT

### Requirements in detail:

1. OBI should provide relevant WiFi settings via MQTT.
2. The parameters to be provided are defined in ECU_diagnostic_jobs_for_setting_wifi_parameters.

### Test design:

Name: OBI WiFi Configuration Read

Preconditions:
1. ECU in plant mode:
   Ensures that the ECU is in the correct mode.
2. OBI active:
   Ensures that the OBI is ready for operation.
3. WiFi connection established:
   Ensures that a network connection is established.
4. MQTT connection established:
   Ensures that the MQTT connection is operational.

Actions:
1. read WiFi parameters via MQTT:
   Reads the WiFi settings via MQTT.

Postcondition:
1. WiFi parameters meet the expectations:
   Checks whether the read parameters meet the defined expectations.

### Evaluation:

The test largely covers the requirement, as:
1. ECU is in plant mode:
   This is ensured by the precondition.
2. OBI is active:
   This is ensured by the precondition.
3. WiFi connection and MQTT connection are established:
   This is ensured by the precondition.
4. Read WiFi parameters via MQTT:
   This is ensured by the action.
5. Check whether the parameters read meet the expectations:
   This is ensured by the post-condition.

### Suggestions for improvement:

1. Detailing the expectations: It would be helpful to explicitly name the expected WiFi parameters or refer to the exact definition in ECU_diagnostic_jobs_for_setting_wifi_parameters.
2. Add verification steps: Additional verification steps could be added to ensure that the parameters read are correct and complete.

### Improved test design:

test-design:
name: OBI WiFi Configuration Read
preconditions:
   ECU in plant Mode
   OBI active
   WiFi connection established
   MQTT connection established
actions:
   Read WiFi parameters via MQTT
   Verify the received parameters against
      "ECU_diagnostic_jobs_for_setting_wifi_parameters'
postconditions:
   WiFi parameters match expectation

### Detailed actions:

actions:
- Read WiFi parameters via MQTT:
   mqtt_topic: "obi/wifi/settings"
   expected_parameters:
      SSID
      Password
      EncryptionType
      Channel
   Verify the received parameters:
      expected_parameters_source:
      "ECU_diagnostic_jobs_for_setting_wifi_parameters"

### Conclusion:

With the above adjustments and verifications, the test covers the given requirement completely and correctly. The detailed steps ensure that the WiFi parameters are read correctly via MQTT and compared with the expected values.

### Prompt 4:

Check these now:
- id: obi_provide_wifi_settings_via_mqtt
   title: OBI provide WiFi settings via MQTT
   requirement: >
      OBI shall provide relevant WiFi settings via MQTT.
   Note: Parameters to be provided are defined at
      'ECU_diagnostic_jobs_for_setting_wifi_parameters'
   test-design:
      name: OBI WiFi Configuration Read
      preconditions:
         ECU in plant Mode
         OBI active
         WiFi connection established
         MQTT connection established
      actions:
         Read WiFi paramters via MCP
      postconditions:
         WiFi parameters match expectation

### Response:

There is a typo in the requirement and the test design that indicates that the WiFi parameters should be read via MCP instead of MQTT. As the requirement states that the WiFi settings should be provided via MQTT, the test should be adapted accordingly.

### Requirement:

ID: obi_provide_wifi_settings_via_mqtt
Title: OBI provide WiFi settings via MQTT

### Requirements in detail:

1. OBI should provide relevant WiFi settings via MQTT.
2. The parameters to be provided are defined in ECU_diagnostic_jobs_for_setting_wifi_parameters.

### Test design:

Name: OBI WiFi Configuration Read

Preconditions:
1. ECU in plant mode:
   Ensures that the ECU is in the correct mode.
2. OBI active:
   Ensures that the OBI is ready for operation.
3. WiFi connection established:
   Ensures that a network connection is established.
4. MQTT connection established:
   Ensures that the MQTT connection is operational.

Actions:
1. Read WiFi parameters via MCP:
   This is an error; it should read "via MQTT".

Postcondition:
1. WiFi parameters meet the expectations:
   Checks whether the read parameters meet the defined expectations.

### Evaluation:

The test largely covers the requirement, but the typo needs to be corrected to ensure consistency with the requirement.

### Suggestions for improvement:

1. Correction of the typo: Change "MCP" to "MQTT".
2. Detailing the expected WiFi parameters: It would be helpful to explicitly name the expected WiFi parameters or refer to the exact definition in ECU_diagnostic_jobs_for_setting_wifi_parameters.
3. Add verification steps: Additional verification steps could be added to ensure that the parameters read are correct and complete.

### Improved test design:

test-design:
   name: OBI WiFi Configuration Read
   preconditions:
      ECU in plant Mode
      OBI active
      WiFi connection established
      MQTT connection established
   actions:
      Read WiFi parameters via MQTT
      Verify the received parameters against
         'ECU_diagnostic_jobs_for_setting_wifi_parameters'
   postconditions:
      WiFi parameters match expectation

### Detailed actions:

actions:
- Read WiFi parameters via MQTT:
   mqtt_topic: "obi/wifi/settings"
   expected_parameters:
      SSID
      Password
      EncryptionType
      Channel
   Verify the received parameters:
      expected_parameters_source:

### Conclusion:

With the correction of the typo and the above-mentioned adjustments and verifications, the test covers the given requirement completely and correctly. The detailed steps ensure that the WiFi parameters are read correctly via MQTT and compared with the expected values.

### Prompt 5:

Requirement 1: OBI shall connect via WiFi only when active
Requirement 2: OBI shall provide its status over WiFi

Are the requirements reasonable or in conflict?

### Response:

The two requirements make sense and are not in direct conflict with each other. They relate to different aspects of the behavior of OBI (the telematics control unit).

### Requirement 1:

OBI shall connect via WiFi only when active
This requirement states that OBI should only connect to the WiFi network when it is active. This ensures that the device does not establish unnecessary connections and possibly saves energy or minimizes security risks when it is inactive.

### Requirement 2:

OBI shall provide its status over WiFi
This requirement states that OBI shall provide its status over WiFi. This could mean that OBI should communicate information such as "active/inactive", "ready for connection", "error status" etc. via WiFi.

### Analysis of the requirements:

1. Connection only when active:
   OBI should only connect to the WiFi network when it is active. This means that there is no WiFi connection when it is inactive.
2. Status transmission via WiFi:
   OBI should provide its status via WiFi. This requires a WiFi connection to transmit the status.

### Combination of requirements:

To ensure that the requirements are consistent, they could be interpreted and combined as follows:
1. If OBI is active and there is a WiFi connection, it should provide its status via this connection.
2. If OBI is inactive, it should not establish a WiFi connection and therefore should not provide a status via WiFi.

### Detailed interpretation:

In active state:
- OBI connects to the WiFi network.
- OBI transmits its status via the WiFi connection.

In an inactive state:
- OBI does not establish a WiFi connection.
- OBI does not transmit a status via WiFi because there is no connection.

### Summary:

The two requirements are complementary and not in conflict if they are interpreted as follows:
- Only in the active state does OBI establish a WiFi connection and transmit its status via this connection.
- When inactive, OBI remains offline and does not transmit any status via WiFi.

### Example:

requirements:
- id: OBI_connect_via_wifi_when_active
   requirement: >
   OBI shall connect via WiFi only when active.
- id: OBI_provide_status_over_wifi
   requirement: >
   OBI shall provide its status over WiFi when connected.

This interpretation and formulation makes it clear that both requirements fit together well and ensure consistent behavior of the OBI.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A computer-implemented method for verifying requirements and tests to be used for test-driven development of at least one software component of a product, such as at least one software component of a vehicle, comprising:
obtaining (110) a natural language description of one or more requirements to be satisfied by the at least one software component;
obtaining (120) a natural-language description or an executable code of one or more tests to be executed for verifying that the at least one software component satisfies the requirements;
processing (130), using a large language model, LLM, the natural language description of the one or more requirements to be satisfied and the natural-language description or the executable code of the one or more tests to be executed, wherein the LLM is prompted to verify the one or more requirements to be satisfied and the one or more tests to be executed, and to provide an output based on the verification; and
providing (140), via a user interface and based on the output of the large language model, information related to the verification.

2. The computer-implemented method according to claim 1, wherein the LLM is prompted to detect discrepancies between the one or more requirements to be satisfied and the one or more tests to be executed as part of the verification.

3. The computer-implemented method according to one of the claims 1 or 2, wherein the LLM is prompted to determine whether the one or more tests are suitable for proving the one or more requirements as part of the verification.

4. The computer-implemented method according to claim 3, wherein the LLM is further prompted to generate, based on the natural language description of the one or more requirements to be satisfied and the natural-language description or the executable code of the one or more tests to be executed, executable code of one or more additional tests having a scope that exceed a scope of the existing tests.

5. The computer-implemented method according to one of the claims 1 to 4, wherein the LLM is prompted to detect assumptions in one or more the tests without a match in the requirements as part of the verification.

6. The computer-implemented method according to one of the claims 1 to 5, wherein the LLM is prompted to determine one or more tests that exceed a scope of the requirements as part of the verification.

7. The computer-implemented method according to one of the claims 1 to 6, wherein the LLM is prompted to determine contradictions between the one or more requirements to be satisfied as part of the verification.

8. The computer-implemented method according to one of the claims 1 to 7, wherein the requirements comprise two or more levels of hierarchy, defining, between two levels of hierarchy, one or more upper-level requirements on the respective higher level of hierarchy and a plurality of derived requirements associated with an upper-level requirement on the respective lower level of hierarchy, with the LLM being prompted to verify a correspondence between the one or more upper-level requirements and the associated derived requirements as part of the verification.

9. The computer-implemented method according to claim 8, wherein the LLM is prompted to verify that the derived requirements match subsets of functionality defined by the associated upper-level requirement as part of the verification.

10. The computer-implemented method according to one of the claims 8 or 9, wherein the LLM is prompted to verify that the derived requirements, taken together, cover the scope defined by the associated upper-level requirement as part of the verification.

11. The computer-implemented method according to one of the claims 8 to 10, wherein the LLM is further prompted to generate, based on the natural language description of the one or more requirements to be satisfied and the natural-language description or the executable code of the one or more tests to be executed, one or more additional derived requirements based on a mismatch between the scope defined by the associated upper-level requirement and the scope of the derived requirements associated with the upper-level requirement.

12. The computer-implemented method according to one of the claims 1 to 11, wherein the LLM is further prompted to generate executable code for at least one test based on the natural language description of the one or more tests.

13. The computer-implemented method according to one of the claims 1 to 12, wherein the LLM is prompted to output information about issues determined as part of the verification, with the information related to the verification being provided with the information about the issues determined as part of the verification,
and/or wherein the LLM is prompted to output information about proposed fixes for issues determined as part of the verification, with the information related to the verification being provided with the information about the proposed fixes.

14. A system (20) for verifying requirements and tests to be used for test-driven development at least one software component of a product, such as at least one software component of a vehicle, the system comprising one or more processors (24) and one or more storage devices (26), wherein the system is configured to perform the method according to one of the claims 1 to 13.

15. A computer program having a program code for performing the method of one of the claims 1 to 13, when the computer program is executed on a computer, a processor, or a programmable hardware component.
